# NEUE EUROPÄISCHE PATENTSCHRIFT

(11) **EP 3 680 624 B2**
(45) Veröffentlichungstag und Bekanntmachung des Hinweises auf die Entscheidung über den Einspruch: **24.12.2025**
(45) Hinweis auf die Patenterteilung: 07.09.2022
(21) Anmeldenummer: 19151358.9
(22) Anmeldetag: 11.01.2019
(51) Int. Cl.: G01D 5/245, G01D 5/249, B61L 23/04, B61L 25/02

(54) **SENSORANORDNUNG**
SENSOR ASSEMBLY
DISPOSITIF DE DÉTECTION

(43) Veröffentlichungstag der Anmeldung: 15.07.2020
(73) Patentinhaber: Leuze electronic GmbH + Co. KG, 73277 Owen/Teck (DE)
(72) Erfinder: Lamparter, Thomas, 72584 Hülben (DE); Teumer, Wolfgang, 72525 Münsingen-Dottingen (DE); Scheu, Thomas, 72639 Neuffen (DE)
(74) Vertreter: Ruckh, Rainer Gerhard

(56) Entgegenhaltungen:
- EP-A1- 1 621 504
- EP-A1- 3 270 114
- EP-A1- 3 282 286
- EP-A2- 1 345 031
- DE-A1- 10 013 767
- DE-A1- 102005 047 658
- DE-T5- 112011 103 834
- DE-T5- 112014 003 434
- DE-U1- 202014 100 689
- JP-A- H0 480 409
- US-A- 2 996 137
- US-A1- 2014 368 837
- PEPPERLFUCHSUSA: "PGV – Automated Guided Vehicle Control AGV", YOUTUBE, XP093116043, Retrieved from the Internet <URL:https://www.youtube.com/watch?v=dDK496dhgds> [retrieved on 20240104]
- PEPPERLFUCHSUSA: "Position Guided Vision Optimal for Automatic Guided Vehicles", YOUTUBE, XP093116045, Retrieved from the Internet <URL:https://www.youtube.com/watch?v=5tyEDJUTKME> [retrieved on 20240104]
- "Handbuch PGV...-F200/-F200A...-B16-V15 Auflicht-Positioniersystem", PEPPERL+FUCHS, 30 September 2016 (2016-09-30), XP093116036, [retrieved on 20240104]
- "Handbuch PGV...-F200/-F200A...-B6-V15B Auflicht-Positioniersystem", PEPPERL+FUCHS, 30 April 2015 (2015-04-30), XP093116037, [retrieved on 20240104]
- "Optical Line Tracker — Auswerter für 2 Kameras — CANopen® — seriell — parallel Port HG G-73840ZC", GÖTTING KG, 2 November 2016 (2016-11-02), XP093116039, Retrieved from the Internet <URL:https://www.goetting.de/dateien/downloads/HG_G-73840ZC_D_geraetebeschreibung_R16_TD.pdf> [retrieved on 20240104]
- "HG G-73840 Optical Line Tracker – Auswerter für 2 Kameras, CANopen® / seriell / parallel Port", GÖTTING, 9 December 2020 (2020-12-09), XP093116041, Retrieved from the Internet <URL:https://www.goetting.de/komponenten/73840> [retrieved on 20240104]

## Beschreibung

Die Erfindung betrifft eine Sensoranordnung.

Derartige Sensoranordnungen bilden generell optische Spurführungssysteme aus, mittels derer eine kontrollierte Bewegung eines Fahrzeugs entlang einer definierten Bahn bewerkstelligt werden kann. Der optische Sensor ist dabei auf dem Fahrzeug montiert. Mit dem optischen Sensor wird eine sich entlang der Bahn des Fahrzeugs erstreckende Spur erfasst, die insbesondere in Form eines eine bestimmte Farbe aufweisenden Streifens ausgebildet, der auf einem Untergrund, insbesondere der Fahrbahn, auf welcher das Fahrzeug fährt, aufgebracht ist. Durch diese Erfassung der Spur wird das Fahrzeug entlang der vorgegebenen Bahn geführt, indem der optische Sensor während der Fahrt des Fahrzeugs fortlaufend Ausgangssignale generiert, die angeben, ob die Spur erfasst wird oder nicht.

Je nach Einsatzbereich wird der die Spur bildende Streifen auf einem Hallenboden einer Fabrikhalle oder sogar im Außenbereich einer Industrieanlage aufgebracht, beispielsweise durch Aufkleben des Streifens oder durch Aufsprühen einer entsprechenden Farbe.

Ein Problem derartiger Systeme besteht darin, dass in größeren Hallen oder Anlagen der Untergrund hinsichtlich der Beschaffenheit und hinsichtlich der Farbe variieren kann. Dies kann dazu führen, dass sich in einigen Bereichen der Untergrund farblich oder kontrastmäßig nur noch schwach von dem die Spur bildenden Streifen unterscheidet. Dies kann dazu führen, dass die Spur vom optischen Sensor nicht mehr sicher erfasst werden kann, wodurch keine sichere Spurführung des Fahrzeugs mehr möglich ist.

Diesem Problem kann prinzipiell dadurch begegnet werden, dass für unterschiedliche Untergründe unterschiedliche Spuren in Form von Streifen ausgewählt werden, deren Farbe einen ausreichenden Kontrast zum Untergrund bildet. Dies ist jedoch äußerst aufwändig.

Die DE 10 2005 047 658 A1 betrifft eine Vorrichtung mit einem von einer Anordnung von Marken gebildeten Positionsmaßsystem und mit einem optischen Sensor zur Erfassung der Marken des Positionsmaßsystems. Der optische Sensor und das Positionsmaßsystem sind relativ zueinander beweglich angeordnet. Dem optischen Sensor ist ein Sensorelement fest zugeordnet, mittels dessen die Marken des Positionsmaßsystems oder Markierungen eines dem Positionsmaßsystem fest zugeordneten Maßsystems erfassbar ist. Die vom optischen Sensor und vom Sensorelement generierten Signale werden in einem Auswertesystem ausgewertet.

Die EP 3 282 286 A1 betrifft einen optischen Sensor zur Erfassung von Objekten in einem Erfassungsbereich und umfasst eine Lichtstrahlen emittierende Lichtquelle, einen Empfänger in Form eines eine Anordnung von Empfangselementen aufweisenden Bildsensors eine Auswerteeinheit zur Auswertung von Empfangsbildern des Bildsensors. Der optische Sensor weist eine Testlichtstrahlen emittierende Testlichtquelle auf, wobei die Testlichtstrahlen auf den Bildsensor geführt sind, wodurch eine Variation der Empfängerbilder erhalten wird. Die Auswerteeinheit ist ausgebildet, Nutzinformationen der Empfangsbilder von Testinformationen, welche von die durch den Testlichtstrahlen bewirkten Variationen der Empfangsbilder gebildet sind, zu separieren und getrennt auszuwerten.

Die EP 1 621 504 A1 betrifft ein langgestrecktes Signalband, das entlang seiner Längserstreckung Signalabschnitte aufweist, die jeweils zumindest zwei verschiedene Informationen enthalten, die jeweils auf einer optischen Eigenschaft, einer magnetischen Eigenschaft oder einer Eigenschaft in Bezug auf eine Reflexion von elektromagnetischen Wellen des Signalabschnittes beruhen und durch zumindest eine Sensoreinrichtung bestimmbar sind, wobei auf der gleichen Eigenschaft beruhende Informationen in alternierenden Signalabschnitten jeweils voneinander verschieden sind. Das Signalband wird in einem System zum Bestimmen eines Bewegungszustandes eines bewegten Körpers eingesetzt, insbesondere eines Fahrkorbes einer Aufzugsanlage.

Die EP 3 270 114 A1 betrifft eine Sensoranordnung mit einem ersten Positionssensor und einem diesem zugeordnetem ersten kooperativem Ziel, welche einen Erfassungsbereich begrenzen. Durch Positionsmessungen werden mit dem ersten Positionssensor gegen das erste kooperative Ziel erste Positionsmesswerte erhalten. Weiterhin sind ein zweiter Positionssensor und ein diesem zugeordnetes zweites kooperative Ziel vorgesehen, welche den Erfassungsbereich begrenzen. Durch Positionsmessungen mit dem zweiten Positionssensor gegen das zweite kooperative Ziel werden zweite Positionsmesswerte erhalten. Mit einer Steuereinheit, in welcher die ersten und zweiten Positionsmesswerte der beiden Positionssensoren zu einer Verrechnungsgröße verrechnet werden, wird die Funktion der Positionssensoren kontrolliert.

Die EP 1 345 031 A2 betrifft eine optoelektronische Vorrichtung zur Erfassung von Marken und weist einen Sendelichtstrahlen emittierenden Sender, einen Empfangslichtstrahlen empfangenden Empfänger, Mittel zur Führung der Sendelichtstrahlen innerhalb eines Abtastbereichs und eine Auswerteeinheit zur Auswertung der am Ausgang des Empfängers anstehenden Empfangssignale auf. Die zu erfassenden Marken bilden ein Positionsmaßsystem. Durch Erfassung von Marken des Positionsmaßsystems zu zwei unterschiedlichen Zeitpunkten t₁, t₂ wird in der Auswerteeinheit aus der innerhalb des Zeitintervalls dt = t₂ - t₁ registrierten Positionsänderung der optoelektronischen Vorrichtung relativ zum Positionsmaßsystem die Geschwindigkeit der optoelektronischen Vorrichtung relativ zum Positionsmaßsystem bestimmt.

Die US 2014/0368837 A1 betrifft ein Detektionssystem zur Absolutwertbestimmung für ein Schienenfahrzeug. Entlang der Schienen, auf welchen das Schienenfahrzeug fährt, sind in vorgegebenen Abständen Muster angeordnet. Diese Muster werden mit einem Laserstrahlen emittierenden Sensor erfasst, wobei das von den Mustern reflektierte Licht ausgewertet wird. Diese Messwerte werden mit Sollwerten verglichen.

Die JP HO480409 A betrifft einen auf einem Fahrzeug installierten Barcodeleser, der auf einer Fahrbahn angeordnete Barcodes liest. In den Barcodes sind Informationen über die Beschaffenheit der Fahrbahn kodiert.

Die US 2,996,137 A betrifft ein auf einem Fahrzeug angeordnetes Radarsystem. Mit dem Radarsystem werden Markierungen auf einer Fahrbahn erfasst, indem durch die Markierungen generierte Echosignale generiert werden.

Die DE 20 2014 100 689 U1 betrifft eine optoelektronische Vorrichtung zur Positionsbestimmung anhand eines sich über eine Längsrichtung erstreckenden Positionsmaßstabs mit Positionsmarken, die einen Lichtempfänger zur Erfassung von Bilddaten einer Positionsmarke über eine Leselinie sowie eine Auswertungseinheit zum Auslesen einer in der Positionsmarke codierten Positionsinformation aus den Bilddaten aufweist. Die Leselinie ist gegenüber der Längsrichtung verkippt. Der Positionsmaßstab weist eine zu der Positionsmarke zugehörige Zusatzinformation auf, die teilweise mit der Positionsmarke überlappend angeordnet ist, und zwar derart, dass die Leselinie die Zusatzinformation nur dann erfasst, wenn die Leselinie aufgrund ihrer Verkippung gegenüber der Längsrichtung ohnehin die Positionsmarke nicht vollständig überstreicht.

Der Erfindung liegt die Aufgabe zugrunde, eine Sensoranordnung der eingangs genannten Art bereitzustellen, welche bei konstruktiv geringem Aufwand eine hohe Funktionalität aufweist.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft eine Sensoranordnung mit einem optischen Sensor, welcher an einem Fahrzeug angeordnet ist. Das Fahrzeug wird entlang einer vorgegebenen Bahn bewegt. Die Sensoranordnung weist eine optische Spur auf, die eine Bahnkurve kennzeichnet und auf einem stationären Untergrund aufgebracht ist, welche eine Fahrbahn bildet, auf der das Fahrzeug fährt, wobei die optische Spur ein sich über deren Länge erstreckendes Kontrastmuster aufweist. Der optische Sensor erfasst das Kontrastmuster der optischen Spur während der Fahrt des Fahrzeugs. Der optische Sensor arbeitet nach dem Lichttasterprinzip. In Abhängigkeit von mit dem optischen Sensor generierten Ausgangssignalen ist eine Spurführung des Fahrzeugs durchführbar. Das Kontrastmuster ist in Längsrichtung der optischen Spur translationsinvariant ausgebildet. Durch die Erfassung des Kontrastmusters wird die Winkellage des optischen Sensors relativ zur optischen Spur bestimmt.

Ein wesentlicher Vorteil der Erfindung besteht darin, dass die optische Spur ein intrinsisches Kontrastmuster aufweist, das heißt ein Kontrastmuster, das Kontrastunterschiede innerhalb der Spur ausbildet, die somit vom optischen Sensor sicher erfasst werden können und zwar unabhängig von der Beschaffenheit des Untergrunds, auf welchem die optische Spur aufgebracht ist. Das Kontrastmuster der optischen Spur kann damit unabhängig von den optischen Eigenschaften des Untergrunds, insbesondere unabhängig von dessen Remissionsgrad, vom optischen Sensor sicher erfasst werden.

Der optische Sensor generiert dann davon abhängig von der Erfassung der optischen Spur Ausgangssignale, die zur Steuerung des Fahrzeugs verwendet werden können.

Besonders vorteilhaft ist in Abhängigkeit von mit dem optischen Sensor generierten Ausgangssignalen eine Spurführung des Fahrzeugs durchführbar.

Der Untergrund, auf der die optische Spur angebracht ist, ist von der Fahrbahn gebildet, auf der das Fahrzeug fährt. Der optische Sensor ist dann im Bereich der Unterseite des Fahrzeugs so montiert, dass dieser in Abstand oberhalb des Untergrunds angeordnet ist, so dass dieser optische Sensor die optische Spur auf dem Untergrund erfassen kann.

Je nach Ausbildung des Fahrzeugs und der Umgebung des Fahrzeugs, kann der Untergrund auch von einer Hallendecke oder dergleichen gebildet sein. Dann kann der optische Sensor an der Oberseite des Fahrzeugs angeordnet sein, um die optische Spur zu erfassen.

Erfindungsgemäß ist das Kontrastmuster in Längsrichtung der optischen Spur translationsinvariant ausgebildet.

Das Kontrastmuster ist damit in Längsrichtung der optischen Spur translationsinvariant ausgebildet. Eine derartige optische Spur ist äußerst einfach aufgebaut und kann dementsprechend einfach hergestellt werden.

Erfindungsgemäß ist das Kontrastmuster von zwei nebeneinander liegenden, sich in Längsrichtung der optischen Spur erstreckenden Streifen mit unterschiedlichen Remissionen gebildet.

Dieses Kontrastmuster weist eine besonders einfache Struktur auf. Durch die beiden in Längsrichtung der optischen Spur verlaufenden Streifen mit unterschiedlichen Remissionen wird am Übergang zwischen den beiden Streifen ein Kontrastunterschied erhalten, der mit dem optischen Sensor einfach und sicher erfasst werden kann. Wesentlich dabei ist, dass dieser Kontrastunterschied nicht an einem der längsseitigen Ränder der optischen Spur, sondern in deren zentralen Bereich liegt. Damit wirken sich Einflüsse der Remission des Untergrunds, unabhängig ob dieser stark oder schwach reflektierend ist, bei der Detektion des Übergangs zwischen den zwei Streifen nicht störend aus, so dass das Kontrastmuster unabhängig von der Beschaffenheit des Untergrunds sicher erfasst werden kann.

Generell weist das Kontrastmuster der optischen Spur ein Kontrastmuster aus, das im inneren Bereich der optischen Spur Kontrastunterschiede ausbildet, die dann mit dem optischen Sensor unabhängig vom Untergrund erfasst werden können.

Schließlich ist durch die Erfassung des Kontrastmusters die Winkellage des optischen Sensors relativ zur optischen Spur bestimmt.

Durch die Erfassung des Kontrastmusters wird mit dem optischen Sensor fortlaufend dessen Winkellage zur optischen Spur, das heißt der Winkel zwischen einer Achse des optischen Sensors zur Achse der optischen Spur bestimmt. Da der optische Sensor fest mit dem Fahrzeug verbunden ist, wird dadurch der aktuelle Winkel zwischen der Achse des Fahrzeugs und der optischen Spur bestimmt. Bei Kurvenfahrten oder bei Wiederanfahren des Fahrzeugs, zum Beispiel nach einem Stromausfall, liefert diese Winkelinformation eine wichtige Zusatzinformation für die Steuerung des Fahrzeugs, beispielsweise um den Lenkeinschlag des Fahrzeugs zu optimieren. Befindet sich beispielsweise die optische Spur in der Mitte des Fahrzeugs beziehungsweise des optischen Sensors, wird jedoch ein von 90° abweichender Winkel zwischen optischem Sensor und optischer Spur detektiert, kann die Lenkung des Fahrzeugs so eingeschlagen werden, dass bei einer Weiterfahrt des Fahrzeugs eine Vergrößerung der Abweichung von der optischen Spur vermieden wird.

Typischerweise wird bei dem Fahrzeug dessen Position nach der Methode der Autometrie bestimmt, das heißt es wird aus der Anzahl der Umdrehungen der Räder die Fahrzeugposition bestimmt. Bei Auftreten eines Schlupfs der Räder ist diese Positionsbestimmung fehlerhaft. Durch eine fortlaufende Erfassung der Kontrastmusterelemente des Kontrastmusters der optischen Spur kann eine Schlupfkontrolle durchgeführt werden, das heißt die Fehler der Positionsbestimmung aufgrund des vorhandenen Schlupfs können korrigiert werden.

Erfindungsgemäß wird durch die Erfassung des Kontrastmusters die Winkellage des optischen Sensors relativ zur optischen Spur bestimmt.

Durch die Erfassung des Kontrastmusters wird mit dem optischen Sensor fortlaufend dessen Winkellage zur optischen Spur, das heißt der Winkel zwischen einer Achse des optischen Sensors zur Achse der optischen Spur bestimmt. Da der optische Sensor fest mit dem Fahrzeug verbunden ist, wird dadurch der aktuelle Winkel zwischen der Achse des Fahrzeugs und der optischen Spur bestimmt. Bei Kurvenfahrten oder bei Wiederanfahren des Fahrzeugs, zum Beispiel nach einem Stromausfall, liefert diese Winkelinformation eine wichtige Zusatzinformation für die Steuerung des Fahrzeugs, beispielsweise um den Lenkeinschlag des Fahrzeugs zu optimieren. Befindet sich beispielsweise die optische Spur in der Mitte des Fahrzeugs beziehungsweise des optischen Sensors, wird jedoch ein von 90° abweichender Winkel zwischen optischem Sensor und optischer Spur detektiert, kann die Lenkung des Fahrzeugs so eingeschlagen werden, dass bei einer Weiterfahrt des Fahrzeugs eine Vergrößerung der Abweichung von der optischen Spur vermieden wird.

Gemäß einer ersten Ausgestaltung ist der optische Sensor als Reflexionslichtgitter ausgebildet, das heißt der optische Sensor weist eine Linearanordnung mehrerer Lichttaster mit jeweils einem Sendelichtstrahlen emittierenden Sender und einem Empfangslichtstrahlen empfangenden Empfänger auf.

Gemäß einer alternativen Ausgestaltung weist der optische Sensor als Empfänger einen Bildsensor auf, der in Form einer zeilen- oder matrixförmigen Anordnung von Empfangselementen ausgebildet ist. Insbesondere in dieser Ausgestaltung kann der optische Sensor als Codeleser ausgebildet sein, um auf der optischen Spur angeordnete Codes erfassen können.

Die Erfindung wird im Folgenden anhand der Zeichnungen erläutert. Es zeigen:
- Figur 1:: Schematische Darstellung der erfindungsgemäßen Sensoranordnung zur Spurführung eines Fahrzeugs.
- Figur 2:: Erstes Ausführungsbeispiel des optischen Sensors der Sensoranordnung gemäß Figur 1.
a) Draufsicht
b) Querschnittsdarstellung
- Figur 3:: Zweites Ausführungsbeispiel des optischen Sensors der Sensoranordnung gemäß Figur 1.
- Figur 4:: Ausführungsbeispiel einer optischen Spur für die Sensoranordnung gemäß Figur 1.
- Figur 5:: Beispiel einer optischen Spur für die Sensoranordnung gemäß Figur 1 nicht zur Erfindung gehörend.
- Figur 6:: Weiteres Beispiel einer optischen Spur für die Sensoranordnung gemäß Figur 1 nicht zur Erfindung gehörend.
- Figur 7:: Weiteres Beispiel einer optischen Spur für die Sensoranordnung gemäß Figur 1 nicht zur Erfindung gehörend.

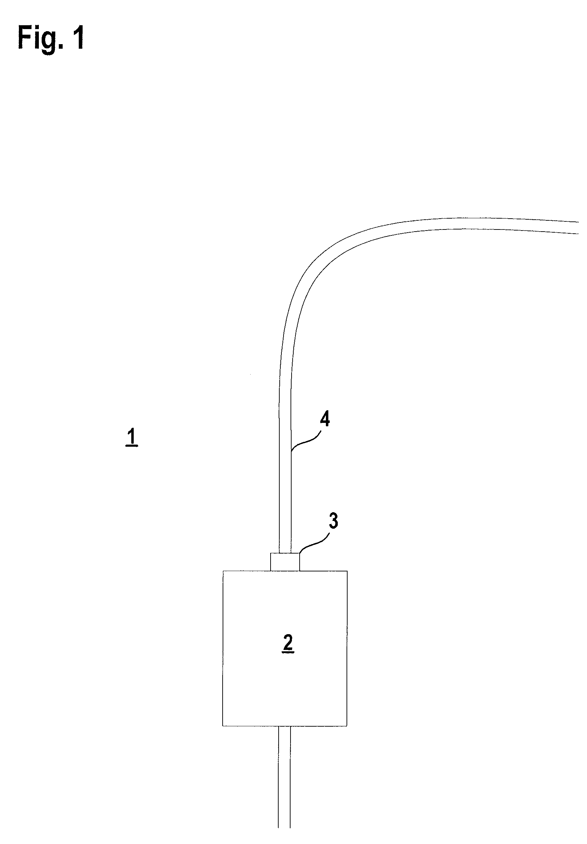

Figur 1 zeigt schematisch ein Ausführungsbeispiel der erfindungsgemäßen Sensoranordnung 1, welches für eine Spurführung eines Fahrzeugs 2 eingesetzt wird. Die Sensoranordnung 1 weist einen optischen Sensor 3 auf, der im vorliegenden Fall an der Frontseite des Fahrzeugs 2 so montiert ist, dass der Erfassungsbereich des optischen Sensors 3, in welchem Objekte oder Objektstrukturen erfasst werden können, auf einen Untergrund gerichtet ist, der als Fahrbahn für das Fahrzeug 2 dient. Der Untergrund kann aus einem Boden einer Halle oder allgemein einer industriellen Anlage gebildet sein.

Auf dem Untergrund ist eine optische Spur 4 als weiteres Bestandteil der Sensoranordnung 1 angeordnet. Die optische Spur 4 kann in Form eines Bands ausgebildet sein, das auf dem Untergrund fixiert wird, beispielsweise durch Klebeverbindungen.

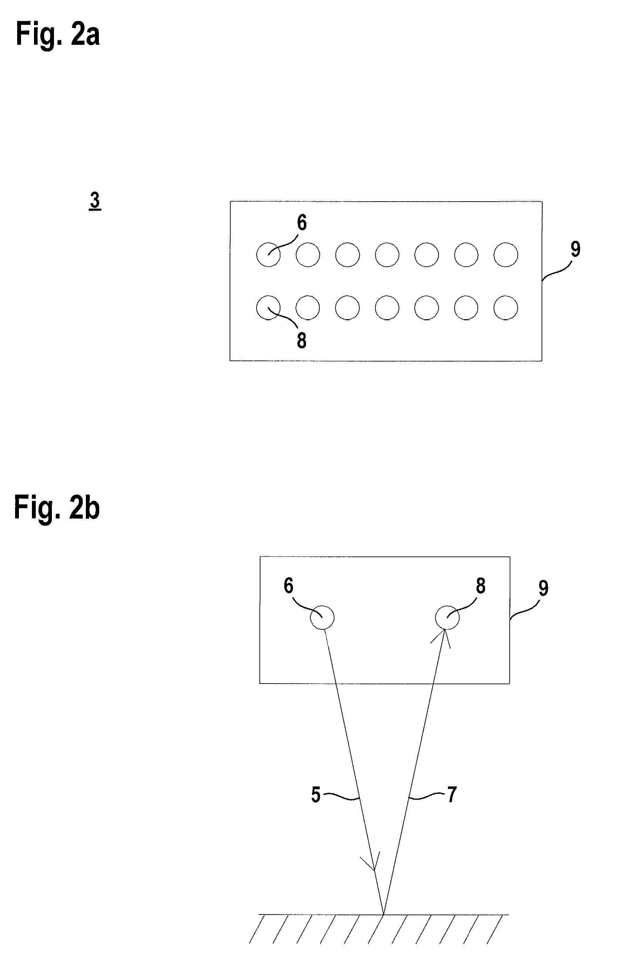

Die Figuren 2a und 2b zeigen ein erstes Ausführungsbeispiel des optischen Sensors 3 der Sensoranordnung 1 gemäß Figur 1. Der optische Sensor 3 ist im vorliegenden Fall als Reflexionslichtgitter ausgebildet. Dieser optische Sensor 3 weist eine Linearanordnung von vorzugsweise identisch ausgebildeten Lichttastern auf, die jeweils aus einem Sendelichtstrahlen 5 emittierenden Sender 6 und einem Empfangslichtstrahlen 7 empfangenden Empfänger 8 bestehen. Die Sender 6 können von Leuchtdioden, die Empfänger von Photodioden gebildet sein. Die Lichttaster sind in einem Gehäuse 9 integriert und sind an eine nicht dargestellte Auswerteeinheit angeschlossen, die die Sender 6 steuert und die Empfangssignale auswertet. Die Auswerteeinheit kann von einem Mikroprozessor oder dergleichen gebildet sein.

Zur Detektion der optischen Spur 4, insbesondere der dort enthaltenen intrinsischen Kontrastmuster, ist die Längsachse des optischen Sensors 3 quer zur Fahrzeugrichtung des Fahrzeugs 2 orientiert, so dass mit diesem die gesamte Breite der optischen Spur 4 erfasst werden kann.

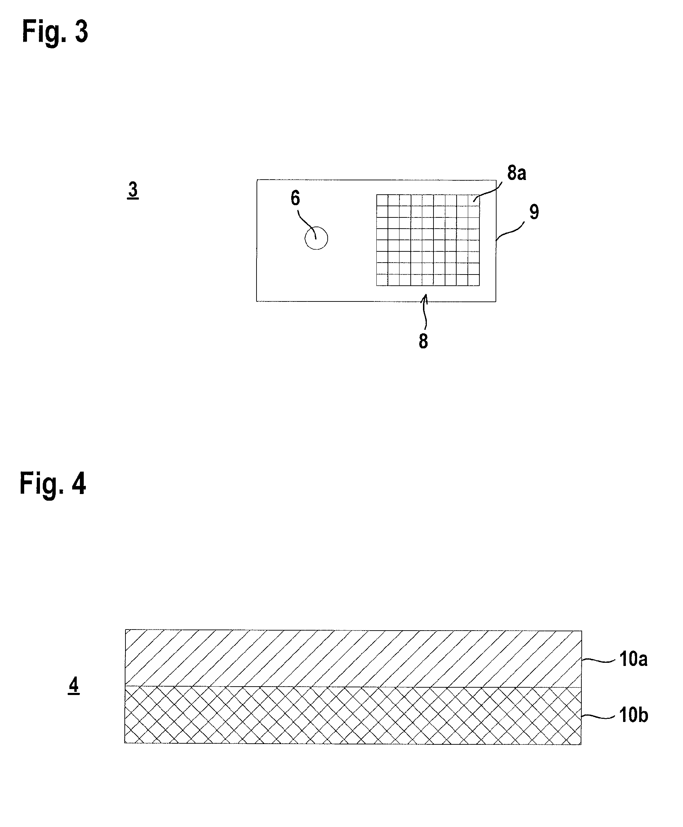

Figur 3 zeigt ein zweites Ausführungsbeispiel des optischen Sensors 3. Dieser optische Sensor 3 weist als Empfänger 8 einen Bildsensor auf, der aus einer matrixförmigen Anordnung von Empfangselementen 8a besteht. Der Bildsensor kann beispielsweise in Form eines CMOS- oder CCD-Arrays ausgebildet sein.

Alternativ kann auch ein zeilenförmiger Bildsensor vorgesehen sein.

Der optische Sensor 3 gemäß Figur 3 weist im vorliegenden Fall eine Beleuchtungseinheit in Form eines einzelnen Sendelichtstrahlen 5 emittierenden Senders 6 auf. Alternativ kann auch eine Mehrfachanordnung von Sendern 6 vorgesehen sein.

Analog zur Ausführungsform der Figur 2 sind die Komponenten des optischen Sensors 3 in einem Gehäuse 9 integriert, insbesondere auch die Auswerteeinheit, die zur Steuerung des oder der Sender 6 und zur Auswertung der Empfangssignale der Empfangselemente 8a des Bildsensors dient.

Insbesondere in der Ausführungsform gemäß Figur 3 ist der optische Sensor 3 als Codeleser ausgebildet. Hierzu ist in der Auswerteeinheit eine entsprechende Dekodiereinheit implementiert.

Die mit dem optischen Sensor 3 abgetastete optische Spur 4 weist generell ein Kontrastmuster auf, das intrinsisch definierte Kontrastübergänge aufweist, die mittels des optischen Sensors 3 unabhängig von den Remissionseigenschaften erkannt werden können.

Mit dem optischen Sensor 3 erfolgt somit fortlaufend während der Fahrt des Fahrzeugs 2 eine ortsaufgelöste Erfassung der optischen Spur 4, wobei in Abhängigkeit hiervon der optische Sensor 3 Ausgangssignale generiert, die der Steuerung des Fahrzeugs 2 für eine Spurführung zugeführt werden. Die Ausgangssignale des optischen Sensors 3 können beispielsweise angeben, ob die optische Spur 4 vollständig, teilweise oder gar nicht erfasst wird. Prinzipiell kann der optische Sensor 3 auch Ausgangssignale ausgeben, die die Lage der optischen Spur 4 innerhalb des Erfassungsbereichs des optischen Sensors 3 angeben.

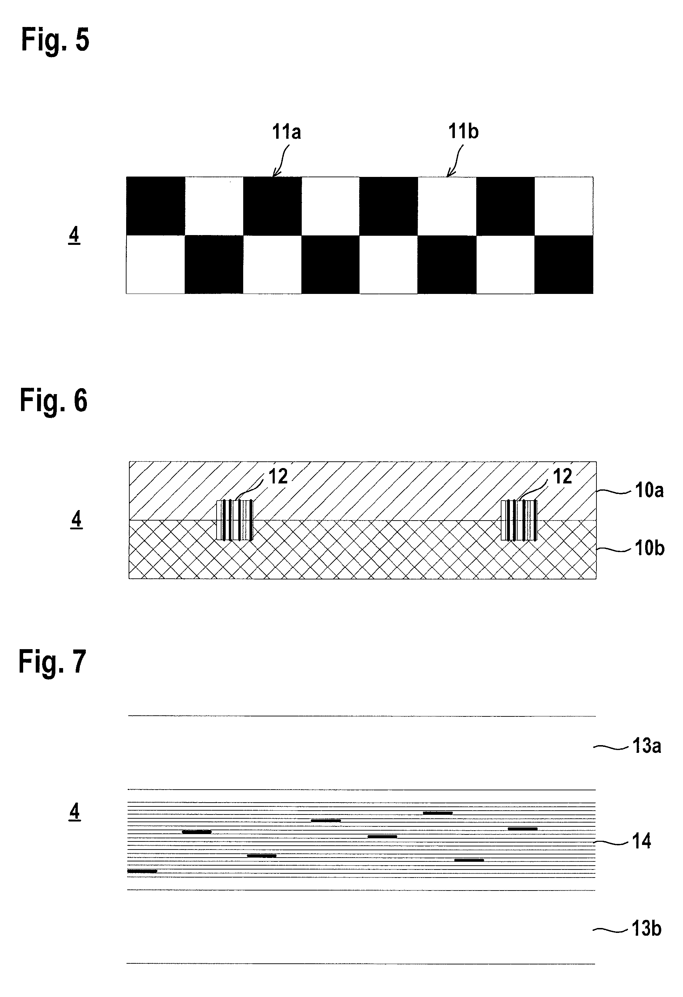

Die Figuren 5 bis 7 zeigen unterschiedliche Beispiele von optischen Spuren 4, nicht zur Erfindung gehörend.

Figur 4 zeigt eine Ausführungsform der optischen Spur 4, die ein translationsinvariantes Kontrastmuster aufweist, das von zwei nebeneinander liegenden Streifen 10a, 10b gebildet ist, die sich mit jeweils konstanter Breite entlang der Längsachse der optischen Spur 4 erstrecken.

Die das Kontrastmuster bildenden Streifen 10a, 10b weisen generell ein unterschiedliches Remissionsverhalten auf, so dass entlang der Trennlinie der Streifen 10a, 10b ein Kontrastübergang, das heißt ein abrupter Wechsel des Kontrasts erhalten wird, der ein intrinsisches Kontrastmuster ausbildet, das mit dem optischen Sensor 3 unabhängig von der Beschaffenheit des Untergrunds erfasst werden kann. Die Streifen 10a, 10b können ein stark unterschiedliches Kontrastverhalten aufweisen, in dem der erste Streifen 10a eine schwarze Fläche und der zweite Streifen 10b eine weiße Fläche ausbildet. Auch können die Streifen 10a, 10b aus unterschiedlichen Farben gebildet sein.

Figur 5 zeigt ein Beispiel der optischen Spur 4, die aus einer alternatierenden Folge unterschiedlicher Kontrastmusterelemente 11a, 11b besteht.

Das erste Kontrastmusterelement 11a besteht aus einem weißen Feld auf einer ersten Seite der optischen Spur 4 und einem flächengleichem schwarzen Feld auf der zweiten Seite der optischen Spur 4.

Das zweite Kontrastmusterelement 11b besteht aus einem schwarzen Feld auf der ersten Seite der optischen Spur 4 und einem flächengleichen weißen Feld auf der zweiten Seite der optischen Spur 4.

Somit ergänzen sich die Kontrastmusterelemente 11a, 11b zu einem Schachbrettmuster, das alternativ aus Feldern unterschiedlicher Farbe bestehen kann.

Auch bei der optischen Spur 4 gemäß Figur 5 ist, ebenso wie die der Ausführungsform gemäß Figur 4, ein intrinsisches Kontrastmuster gegeben, das unabhängig von den Remissionseigenschaften des Untergrunds sicher detektiert werden kann, wodurch eine sichere Spurführung des Fahrzeugs 2 ermöglicht wird.

Weiterhin wird die optische Spur 4 gemäß Figur 5 als Inkrementalspur genutzt, indem bei der Fahrt des Fahrzeugs 2 mit dem optischen Sensor 3 fortlaufend die Kontrastmusterelemente 11a, 11b der optischen Spur 4 bestimmt werden. Dadurch bildet der optische Sensor 3 mit der optischen Spur 4 einen Inkrementalgeber zur Bestimmung der Relativposition des Fahrzeugs 2.

Durch die Auswertung der zeitlichen Abfolge bei der Detektion der Kontrastmusterelemente 11a, 11b kann außerdem die Geschwindigkeit des Fahrzeugs 2 bestimmt werden.

Schließlich kann durch eine Steuerung der Kontrastmusterelemente 11a, 11b eine Schlupfkontrolle durchgeführt werden. Dies ist dann der Fall, wenn mittels eines Autometrieverfahrens durch die Erfassung der Umdrehungen der Räder die Position des Fahrzeugs 2 erfasst wird, wobei diese Positionserfassung durch einen Schlupf der Räder verfälscht sein kann.

Figur 6 zeigt eine Erweiterung des Beispiels der optischen Spur 4 bestehend aus den beiden Streifen 10a, 10b. In diesem Fall sind an vorgegebenen Positionen der optischen Spur 4 Codes 12 vorgesehen. In den Codes 12 können deren Absolutpositionen kodiert sein, so dass durch Lesen der Codes 12 mittels des optischen Sensors 3 die Absolutposition des Fahrzeugs 2 bestimmt werden kann. Weiterhin können in den Codes 12 Spurführungsinformationen kodiert sein, wobei diese auch anwenderspezifisch programmiert werden können. Beispiele für derartige Spurführungsinformationen sind Informationen über eine Weiche der optischen Spur 4. Auch kann damit eine Haltestelle für das Fahrzeug 2 kodiert sein.

Figur 7 zeigt ein weiteres Beispiel einer optischen Spur 4. Diese optische Spur 4 weist zwei äußere Streifen 13a, 13b auf, die unterschiedliche Kontraste, insbesondere auch unterschiedliche Farbgebunden aufweisen können. Zwischen den Streifen 13a, 13b befindet sich eine Codespur 14 mit einem fortlaufenden, ortsabhängig variierendem Code 12, in dem Positionsinformationen und/oder Spurführungsinformationen kodiert sein können.

### Bezugszeichenliste

- (1): Sensoranordnung
- (2): Fahrzeug
- (3): Optischer Sensor
- (4): Optische Spur
- (5): Sendelichtstrahlen
- (6): Sender
- (7): Empfangslichtstrahlen
- (8): Empfänger
- (8a): Empfangselemente
- (9): Gehäuse
- (10a): Streifen
- (10b): Streifen
- (11a): Kontrastmusterelement
- (11b): Kontrastmusterelement
- (12): Code
- (13a): Streifen
- (13b): Streifen
- (14): Codespur

## Patentansprüche

1. Sensoranordnung (1) mit einem optischen Sensor (3), welcher an einem Fahrzeug (2) anordenbar ist, welches entlang einer vorgegebenen Bahn bewegt wird, wobei die Sensoranordnung eine optische Spur aufweist, die eine Bahnkurve kennzeichnet und auf einem stationären Untergrund aufbringbar ist, welcher eine Fahrbahn bildet, auf der das Fahrzeug fährt, wobei die optische Spur (4) ein sich über deren Länge erstreckendes Kontrastmuster aufweist, und wobei der optische Sensor (3) dazu geeignet ist, das Kontrastmuster der optischen Spur (4) während der Fahrt des Fahrzeugs (2) zu erfassen und wobei der optische Sensor nach dem Lichttasterprinzip arbeitet, wobei in Abhängigkeit von mit dem optischen Sensor (3) generierten Ausgangssignalen eine Spurführung des Fahrzeugs (2) durchführbar ist, und wobei das Kontrastmuster in Längsrichtung der optischen Spur (4) translationsinvariant ausgebildet ist, **dadurch gekennzeichnet, dass** die Sensoranordnung (1) dazu geeignet ist, durch die Erfassung des Kontrastmusters die Winkellage des optischen Sensors (3) relativ zur optischen Spur (4) zu bestimmen, und dass das Kontrastmuster von zwei nebeneinander liegenden, sich in Längsrichtung der optischen Spur (4) erstreckenden Streifen (10a, 10b) mit unterschiedlichen Remissionen gebildet ist .

2. Sensoranordnung (1) nach Anspruch 1, **dadurch gekennzeichnet, dass** der optische Sensor (3) einen Bildsensor aufweist, oder dass der optische Sensor (3) in Form eines Reflexionslichtgitters ausgebildet ist.

3. Sensoranordnung (1) nach einem der Ansprüche 1 oder 2, **dadurch gekennzeichnet, dass** der optische Sensor (3) ein Codeleser ist.

## Claims

1. Sensor assembly (1) with an optical sensor (3) which can be arranged on a vehicle (2) which is moved along a predetermined path, wherein the sensor assembly has an optical track which marks a path curve and can be applied to a stationary surface which forms a roadway on which the vehicle travels, wherein the optical track (4) having a contrast pattern extending over its length, and wherein the optical sensor (3) is suitable for detecting the contrast pattern of the optical track (4) during the journey of the vehicle (2), and wherein the optical sensor operates according to the light sensor principle, wherein track guidance of the vehicle (2) can be carried out as a function of output signals generated by the optical sensor (3), and wherein the contrast pattern is designed to be translation-invariant in the longitudinal direction of the optical track (4), **characterised in that** the sensor assembly (1) is suitable for determining the angular position of the optical sensor (3) relative to the optical track (4) by detecting the contrast pattern, and **in that** the contrast pattern is formed by two adjacent strips (10a, 10b) with different remissions.

2. Sensor assembly (1) according to claim 1, **characterised in that** the optical sensor (3) has an image sensor, or that the optical sensor (3) is designed in the form of a reflective light grid.

3. Sensor assembly (1) according to one of claims 1 or 2, **characterised in that** the optical sensor (3) is a code reader.

## Revendications

1. Agencement de capteur (1) comprenant un capteur optique (3) pouvant être disposé sur un véhicule (2) qui se déplace le long d'une trajectoire prédéfinie, le agencement de capteur comportant une piste optique qui caractérise une courbe de trajectoire et qui peut être appliquée sur un support stationnaire formant une chaussée sur laquelle roule le véhicule, la piste optique (4) comportant un motif contrasté s'étendant sur toute sa longueur, et le capteur optique (3) étant adapté pour détecter le motif contrasté de la piste optique (4) pendant le déplacement du véhicule (2), et le capteur optique fonctionnant selon le principe du capteur photoélectrique, un guidage du véhicule (2) pouvant être effectué en fonction des signaux de sortie générés par le capteur optique (3), et le motif contrasté étant conçu de manière invariante en translation dans le sens longitudinal de la piste optique (4), **caractérisé en ce que** l'agencement de capteur (1) est conçu pour déterminer, par la détection du motif contrasté, la position angulaire du capteur optique (3) par rapport à la piste optique (4), et **en ce que** le motif contrasté est formé par deux bandes adjacentes (10a, 10b) s'étendant dans le sens longitudinal de la piste optique (4) (10a, 10b) adjacentes, s'étendant dans la direction longitudinale de la piste optique (4) et présentant des réflexions différentes.

2. Agencement de capteur (1) selon la revendication 1, **caractérisé en ce que** le capteur optique (3) comporte un capteur d'image ou **en ce que** le capteur optique (3) est réalisé sous la forme d'une grille de lumière réfléchissante.

3. Agencement de capteur (1) selon l'une des revendications 1 ou 2, **caractérisé en ce que** le capteur optique (3) est un lecteur de code.
